# EUROPÄISCHE PATENTSCHRIFT

(11) **EP 0 932 305 B1**
(45) Veröffentlichungstag und Bekanntmachung des Hinweises auf die Patenterteilung: **19.03.2003**
(21) Anmeldenummer: 98124772.9
(22) Anmeldetag: 28.12.1998
(51) Int. Cl.: H04N 7/18

(54) **Kamera**
Camera
Caméra

(30) Priorität: 21.01.1998 DE 29800956 U
(43) Veröffentlichungstag der Anmeldung: 28.07.1999
(73) Patentinhaber: Unterhauser Com GmbH, 55559 Bretzenheim (DE)
(72) Erfinder:
(74) Vertreter: Hofstetter, Alfons J., Dr.rer.nat.

(56) Entgegenhaltungen:
- DE-U- 29 607 588
- GB-A- 2 312 803
- US-A- 4 977 449
- PATENT ABSTRACTS OF JAPAN vol. 010, no. 379 (E-465), 18. Dezember 1986 (1986-12-18) & JP 61 170192 A (MATSUSHITA ELECTRIC IND CO LTD), 31. Juli 1986 (1986-07-31)

## Beschreibung

Die Erfindung betrifft eine Kamera, insbesondere eine Kamera mit einer Umwandlungsvorrichtung zur Umwandlung mindestens eines optischen Signals in ein elektrisches Signal.

Unter diese Definition fallen herkömmliche Videokameras, wie sie beispielsweise im privaten Bereich verwendet werden, sowie auch Überwachungskameras. Während herkömmliche Videokameras über eine Ausstattung verfügen, die eine Aufzeichnung von Bild und Ton ermöglicht, ist dies bei Überwachungskameras üblicherweise nicht der Fall.

Insbesondere für Überwachungszwecke sind herkömmliche Videokameras aufgrund ihres Preises und der für diese Zwecke unnötigen Ausstattung nicht geeignet. Übliche Überwachungskameras haben den Nachteil, daß sie nicht in einfacher und preiswerter Art und Weise, beispielsweise von Privatpersonen, zur Überwachung ihres Hauses oder Grundstücks, eingesetzt werden können, da sie an einen separaten Monitor angeschlossen werden müssen, der auf die Frequenz des Ausgangssignals der Überwachungskamera abgestimmt ist. Insbesondere ergeben sich durch die Anschaffung und den Platzbedarf eines zusätzlichen Monitors Nachteile, die eine Anwendung derartiger Überwachungskameras, insbesondere für kleinere Betriebe oder Privatleute, uninteressant macht.

Aus der DE 296 07 588 U ist eine Anordnung für die Zugangsüberwachung von Gebäuden bekannt, die eine Kamera, einen Modulator sowie Wählschaltmittel zur Einstellung eines Kanals, auf den das Ausgangssignal der Kamera gemischt werden soll, umfasst. Bei dieser Anordnung wird die Kamera im Bereich der Haustürklingelanlage einer Wohnanlage montiert und stellt den Teilnehmern die Möglichkeit bereit, dass das Bild der Kamera auf einem Fersehgerät angezeigt wird.

Aus der GB-A-2 312 803 ist ein Kamerasicherheitssystem bekannt, bei dem mehrere, auf unterschiedlichen Frequenzen arbeitende Kameras über je ein Koaxialkabel mit einer Haupteinheit verbunden sind, die ihrerseits jeweils eines der Kamerasignale an ein Fernsehgerät weiterleitet.

Aus der US 4, 977,449 ist ein Kamerasystem bekannt, bei dem die Modulationsfrequenzen der einzelnen Kameras von einem Prozessor gesteuert werden.

Es ist deshalb Aufgabe der vorliegenden Erfindung, eine Kamera zur Verfügung zu stellen, die die Nachteile des Standes der Technik vermeidet, insbesondere eine Überwachung auf preisgünstige Art und Weise ermöglicht, und überdies den Installationsaufwand minimiert.

Diese Aufgabe wird gelöst durch eine Kamera mit den Merkmalen von Patentanspruch 1.

In einer besonders vorteilhaften Ausführungsform wird der Kamera über ihren HF-Ausgangsanschluß, d. h. den Ausgangsanschluß, an dem das Ausgangssignal der Umsetzvorrichtung anliegt, eine Gleichspannung zugeführt, die dem Betrieb der Kamera dient. Durch diese Ausbildung braucht die Kamera nur mit einem einzigen Anschluß versehen werden, was den Installationsaufwand auf ein Minimum bringt. Zu diesem Zweck verfügt die Kamera über eine Filterschaltung, durch die die Gleichspannung zum Betrieb der Kamera von dem HF-Ausgangssignal getrennt wird.

In besonders vorteilhafter Weise läßt sich die Eingabevorrichtung durch Verwendung eines Tasters realisieren, der im Zusammenspiel mit mindestens einer LED die Einstellung der gewünschten Zielfrequenz ermöglicht. Die mindestens eine LED kann weiterhin dazu Verwendung finden, beispielsweise durch Variation von Blinkdauer und Blinkfrequenz, die eingegebene Zielfrequenz in verschlüsselter Form anzuzeigen.

Die Umsetzvorrichtung umfaßt einen HF-Modulator und einen Mikroprozessor, wobei das Ausgangssignal der Eingabevorrichtung dem Mikroprozessor zugeführt wird und von diesem in ein Steuersignal umgesetzt wird, das an den HF-Modulator angelegt wird.

Bei der erfindungsgemäßen Kamera weist der HF-Modulator zumindest einen Eingangsanschluß für ein weiteres HF-Signal, beispielsweise einer weiteren Kamera des erfindungsgemäßen Typs, auf. Dadurch kann erreicht werden, daß mehrere derartige Kameras in Reihe geschaltet werden, wobei an der letzten Kamera in der Reihe, d. h. der Kamera, die dem Fernsehgerät am nächsten liegt, eine Kombination der Ausgangssignale aller Kameras dieser Reihe anliegt. In vorteilhafter Weise wird dies dadurch unterstützt, daß die Gleichspannung der dem Fernsehgerät zunächst angeordneten Kamera auch den weiteren Kameras vorzugsweise über die Verbindung zur Verfügung gestellt wird, über die der letzten Kamera in der Reihe das HF-Ausgangssignal der weiteren Kameras zugeführt wird. Zur Unterstützung dieser Funktion wird die Gleichspannung vor Einspeisung dieses Signals in den HF-Modulator der letzten Kamera in dieser Reihe, beispielsweise unter Verwendung einer Filterschaltung, abgetrennt. Diese Variante bietet, wie erwähnt, den Vorteil, daß das Ausgangssignal der letzten Kamera eine Kombination der Ausgangssignale aller Kameras in der Reihe umfaßt, wobei, um gegenseitige Störungen zu vermeiden, jede Kamera auf eine andere Zielfrequenz eingestellt ist. Auf diese Art und Weise können die Ausgangssignale der einzelnen Kameras, z. B. durch einfaches Umschalten am Fernsehgerät, nacheinander betrachtet werden.

Die Kamera kann weiterhin eine Transformationsvorrichtung aufweisen, mit der das der Kamera zugeführte Gleichspannungssignal auf ein niedrigeres und insbesondere ein höheres Spannungsniveau transformierbar ist, sofern die Bauelemente der Kamera ein derartiges Spannungsniveau benötigen. Weitere vorteilhafte Weiterbildungen der Erfindung sind in den abhängigen Ansprüchen definiert.

Ein Ausführungsbeispiel wird im folgenden unter Hinweis auf die beigefügten Zeichnungen näher beschrieben. Es stellen dar:
- Fig. 1: eine Darstellung der erfindungsgemäßen Kamera als Blockschaltbild;
- Fig. 2: einen Schaltplan einer realisierten Ausführungsform der erfindungsgemäßen Kamera; und
- Fig. 3: einen Programmablaufplan zur Einstellung einer bestimmten Zielfrequenz bzw. eines Testmusters.

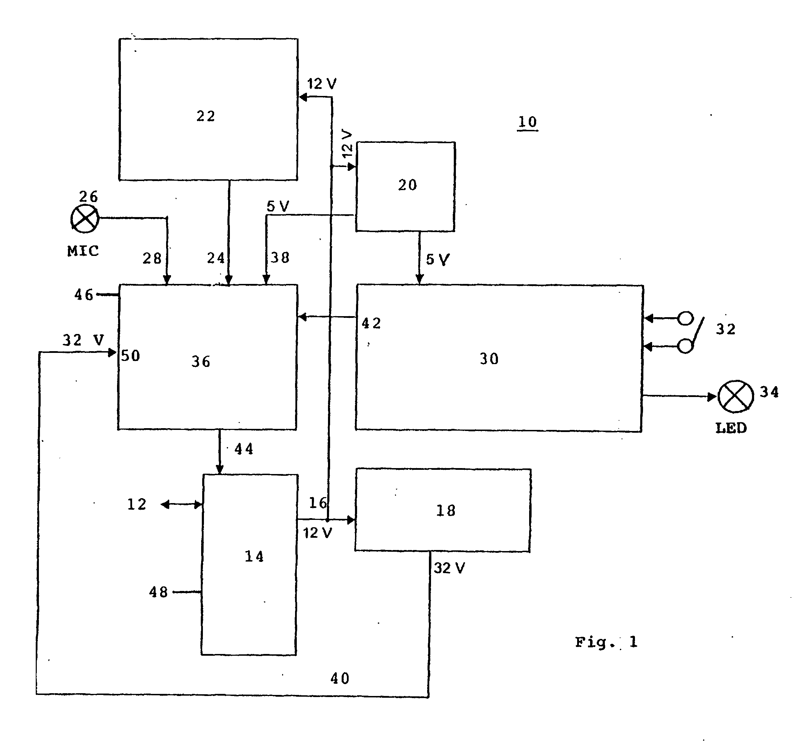

In Fig. 1 ist schematisch in Blockschaltbildform der Aufbau einer Kamera 10 gezeigt. Am Ausgangsanschluß 12 steht das HF-Ausgangssignal zur Verfügung. Gleichzeitig wird über diesen Anschluß die Kamera 10 mit Gleichspannung versorgt. Zur Gleichspannungsversorgung kann jedoch auch ein separater Anschluß der Kamera verwendet werden. Jedoch hat die dargestellte Realisierung den Vorteil, daß die Kamera mit nur einem Anschlußkabel verbunden werden muß, wodurch sich der Installationsaufwand minimiert. In einem Bauteil 14 wird zum einen die Gleichspannung aus dem am Anschluß 12 anliegenden Signal ausgekoppelt, zum anderen das hochfrequente Ausgangssignal der Kamera auf diesen Anschluß 12 gelegt. Dies wird weiter unten näher ausgeführt.

Liegt am Anschluß 12 eine Gleichspannung von 12 Volt an, so stehen nach der Auskopplung am Anschluß 16 12 Volt zur Verfügung. Aus diesen 12 Volt Gleichspannung wird in einem Bauelement 18, vorzugsweise einer Kaskadenstufe, eine Spannung von 32 Volt generiert. Zum anderen wird in einem Bauelement 20 aus der 12 Volt Gleichspannung, vorzugsweise unter Verwendung eines Reglers, eine Gleichspannung von 5 Volt generiert. Die Gleichspannung von 12 Volt liegt ferner direkt an einem CCD (charge coupled device) -Kameramodul 22 an. Das CCD-Kameramodul erzeugt aus optischen Eingangssignalen ein elektrisches Videosignal 24. Unter Verwendung eines optionalen Mikrofons 26 wird ein akustisches Signal in ein elektrisches Signal 28 umgewandelt.

Am Mikroprozessor 30, der im vorliegenden Fall mit einer Versorgungsspannung von 5 Volt beaufschlagt ist, ist ein Taster 32 angeschlossen, der durch eine Bedienperson geschlossen und vorzugsweise selbständig durch eine Feder (nicht dargestellt) wieder geöffnet wird. Über diesen Taster können durch Dauer der Tastung bzw. der Anzahl der Tastungen Informationen bezüglich einer weiter unten näher ausgeführten Zielfrequenz eingegeben werden. Über eine Leuchtdiode 34 kann die eingegebene Zielfrequenz in verschlüsselter Form angezeigt werden, wobei selbstverständlich auch Ausführungsformen mit mehr als einer Leuchtdiode generiert werden können. An einen HF-Modulator 36, der über eine Leitung 38 an die 5 Volt-Gleichspannungsquelle in der Kamera angeschlossen ist, werden das Videosignal 24 vom CCD-Kameramodul 22 und/oder das Audiosignal 28 vom Mikrofon 26 angelegt. Der HF-Modulator 36 ist weiterhin über eine Leitung 40 mit der 32 Volt Gleichspannungsquelle, die in dem Bauelement 18 erzeugt wird, verbunden. Der Mikroprozessor 30 erzeugt in Abhängigkeit der vom Taster 32 eingegebenen Information Steuerdaten, die mit einer Ziel- oder Umsetzfrequenz korrespondieren, d. h. einer Frequenz, auf die das Video- und/oder Audiosignal im HF-Modulator 36 umgesetzt wird. Die Informationen betreffend die Ziel- oder Umsetzfrequenz werden am Mikroprozessor 30 am Ausgang 42 als Steuerdaten für den HF-Modulator 36 bereitgestellt. In dem HF-Modulator 36 wird das Video- und/oder Audiosignal 24 bzw. 28 auf die über den Taster 32 eingegebene Ziel- bzw. Umsetzfrequenz umgesetzt und steht als HF-Signal am Ausgang 44 des HF-Modulators 36 bereit. Für die Audiosignale lassen sich dabei sogenannte Audio-Unterträgerfrequenzen über den Taster 32 festlegen. Vom Ausgang 44 wird das HF-Signal dem Bauelement 14 zugeführt, indem es auf den Ausgangsanschluß 12 gelegt wird. Der Anschluß 12 dient somit in dem dargestellten Ausführungsbeispiel sowohl als Ausgang für das HF-Signal, als auch als Eingang für das Gleichspannungssignal.

Die Ziel- bzw. Umsetzfrequenz des Modulators liegt vorzugsweise im Empfangsbereich eines herkömmlichen Fernsehgeräts, d. h. zwischen 471,25 und 855,25 MHz, was Kanal 21 bis Kanal 69 entspricht. Für andere Fernsehsysteme können ohne weiteres andere Umsetzfrequenzen gewählt werden.

Der Anschluß 12 ist vorzugsweise mit einer Einschleusweiche (nicht dargestellt) verbunden, die ihrerseits zum einen mit einer 12 Volt Gleichspannungsquelle verbunden ist, zum anderen mit dem Eingangsanschluß eines herkömmlichen Fernsehgeräts. Durch die Einschleusweiche wird sichergestellt, daß ein gleichspannungsfreies Signal an den Eingangsanschluß des Fernsehgeräts angelegt wird.

Am HF-Modulator 36 kann weiterhin ein Anschluß 46 vorgesehen werden, der als HF-Eingangsanschluß ausgebildet ist. Über diesen Eingang kann das HF-Ausgangssignal mindestens einer weiteren Kamera 10 in den HF-Modulator 36 eingespeist werden. Auf diese Art und Weise können mehrere Kameras 10, vorzugsweise nach Art einer Reihenschaltung, miteinander verbunden werden. Es kann darüber hinaus vorgesehen werden, unter Verwendung einer weiteren Einschleusweiche, die in der dem Fernsehgerät zunächst angeordneten Kamera 10 vorhandene Gleichspannung den weiteren Kameras 10, vorzugsweise über die Verbindung, über die das jeweilige HF-Signal übertragen wird, zur Verfügung zu stellen. Dadurch können mehrere dieser Kameras 10 nach Art einer Serienschaltung verbunden werden, wobei von Kamera zu Kamera jeweils nur ein Verbindungskabel nötig ist, über das sowohl Gleichspannung als Versorgungsspannung in die eine Richtung, als auch HF-Signale in die jeweils andere Richtung geleitet werden. Die 12-Volt-Versorgungsspannung für die weiteren Kameras kann beispielsweise am Ausgang 48 des Bauelements 14 zur Verfügung gestellt werden. Zur Weiterleitung an die nächste Kamera 10 werden die Anschlüsse 46 und 48 in einer Einschleusweiche verbunden, die ebenfalls vorzugsweise im Gehäuse der Kamera 10 angeordnet sein kann, wobei ein dritter Anschluß der Einschleusweiche mit dem Ausgangsanschluß der nächsten Kamera 10 verbunden ist. Wenn jede dieser Kameras 10 auf einer anderen Zielfrequenz arbeitet, so wird am Ausgangsanschluß 12 der dem Fernsehgerät zunächst angeordneten Kamera, d. h. der Kamera 10, die letztendlich mit dem Fernsehgerät verbunden ist, ein Gemisch der Ausgangssignale aller Kameras 10 zur Verfügung gestellt, wobei sich die einzelnen Signale nicht stören. Am Fernsehgerät können dann durch schlichtes Umschalten auf den jeweiligen Kanal die entsprechenden Signale der entsprechenden Kameras 10 angezeigt bzw. angehört werden.

Im HF-Modulator 36 können verschiedene Audiounterträger, d. h. unterschiedliche Trägerfrequenzen für das Audiosignal relativ zum Träger des Videosignals, ein Testmustergenerator und eine Möglichkeit zum Feintuning vorgesehen werden, die ebenfalls über die Eingabevorrichtung 32, d. h. im Ausführungsbeispiel nach Figur 1 durch einen Taster, ausgewählt und aktiviert werden können.

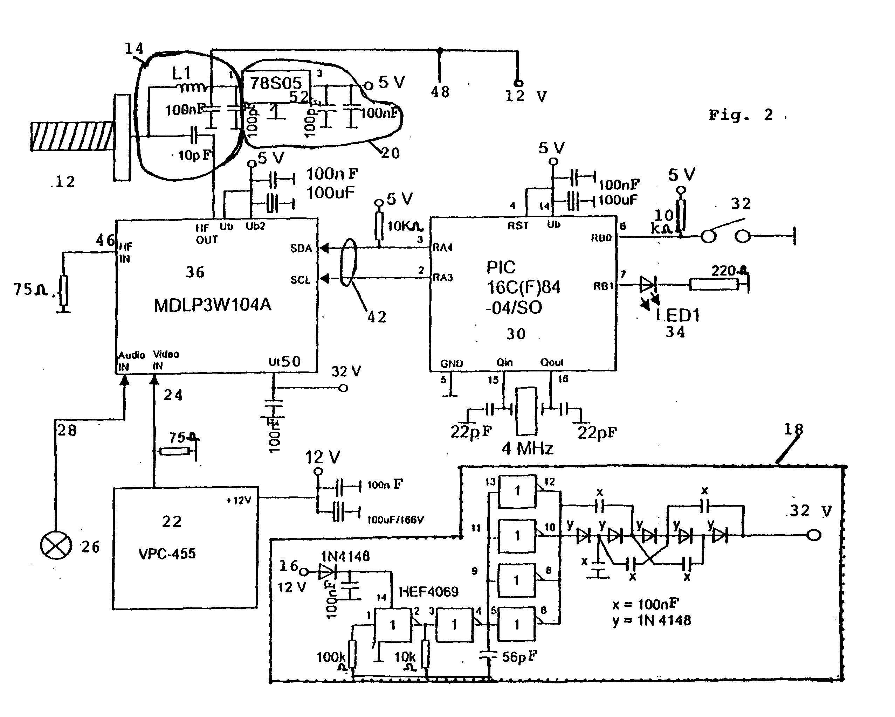

Figur 2 zeigt eine praktische Realisierung des in Figur 1 dargestellten Blockschaltbilds. Hierbei bezeichnen gleiche Bezugszahlen gleiche Bauelemente, Anschlüsse bzw. Baugruppen, wie in Figur 1.

Im dargestellten HF-Modulator 36 wird die am Eingang 50 angeschlossene Spannung (Tuningspannung) von 32 Volt je nach der eingestellten Ziel- bzw. Umsetzfrequenz an eine im HF-Modulator untergebrachte Kapazitätsdiode angelegt. Eine derartige Diode ändert ihre Kapazität durch Änderung der angelegten Spannung. Dadurch, daß die Diode im Hauptschwingkreis des HF-Modulators angeordnet ist, läßt sich hierdurch eine Änderung der Zielfrequenz bewirken.

Als Einspeisungsanschluß für die Gleichspannung bzw. als Ausgangsanschluß 12 für die HF-Spannung wird eine F-Buchse verwendet. Unter einer F-Buchse versteht man eine spezielle HF-Buchse mit Schraubverbindung, die in der Satellitentechnik in Empfangsgeräten und LNBs verwendet wird. Seit einiger Zeit setzt sich diese Art des Anschlusses auch in der Fernsehtechnik durch. Der Vorteil dieser Buchse liegt in der Konfektion der Kabelverbindung von Buchse zu Buchse, wobei hierfür ein F-Stecker verwendet wird. Ein Koaxialkabel läßt sich nach Entfernung der Isolierschicht über eine Strecke von ca. 10 mm einfach per Hand in einen F-Stecker einschrauben und ist bezüglich Hochfrequenz dicht, da der F-Stecker aus Metall besteht. Ferner wird kein zusätzlicher Steckpin benötigt, da der Mittelleiter des Koaxialkabels im F-Stecker freigelegt ist und so beim Aufschrauben auf eine F-Buchse mit dieser fest verbunden wird.

Im Bauelement 14 wird die an der F-Buchse 12 anliegende Gleichspannung von 12 Volt unter Verwendung einer Spule L1 aus dem HF-Ausgangssignal gleichspannungsmäßig entkoppelt, durch die dargestellten Kondensatoren gesiebt und dem Spannungsstabilisatorbaustein 52 zugeführt. An dessen Ausgang läßt sich eine Spannung von 5 Volt abgreifen, die wiederum durch zwei Kondensatoren geglättet wird. Die 5-Volt-Gleichspannung steht im dargestellten Beispiel für den HF-Modulator 36 und den Mikroprozessor 30 zur Verfügung. Die 12-Volt-Spannung, die am Bauelement 14 abgegriffen werden kann, steht dem CCD-Kameramodul 22 zur Verfügung, sie wird jedoch auch dem Bauelement 18 zugeführt, in dem eine Kaskadenstufe Verwendung findet. Diese Kaskadenstufe besteht im wesentlichen aus einem Oszillator, welcher mit einer Frequenz von ca. 140 kHz arbeitet. Die Oszillatorstufe umfaßt hierbei einen 100 kΩ, einen 10 kΩ Widerstand und einen 56 pF-Kondensator. Durch Rückkopplung des invertierten Signals entsteht eine Schwingstufe. Als Inverter wird ein CMOS Baustein vom Typ HEF 4069 verwendet. Dieser erhält seine Betriebsspannung an Pin 14 über eine Diode vom Typ 1N4148. Der nach der Diode geschaltete 100 nF Kondensator bewirkt, daß keine Störung der Oszillatorfrequenz in die 12 Volt Spannungsversorgung zurückgeleitet wird. Am Pin 4 des Inverterbausteins sind nochmals vier Inverter zusammengeschaltet, um einen höheren Ausgangsstrom zu gewinnen. Die Ausgangsfrequenz liegt an den zusammengeschalteten Pins 6, 8, 10 und 12 des Inverters an, die dann auf die Kaskadenschaltung gegeben wird. Pro Kaskade, bestehend aus einer Diode vom Typ 1N4148 und einem 100 nF Kondensator, wird eine Spannungserhöhung von 4 Volt erzielt, so daß am Ausgang bzw. nach der letzten Kaskade eine Spannung von 32 Volt zur Verfügung steht. Der Ausgangsstrom ist sehr gering, ca. 2 mA, reicht jedoch aus, um im HF-Modulator die Tuningspannung zu erzeugen.

Die Steuerung des HF-Modulators 36, insbesondere die Einstellung der Umsetzfrequenz, erfolgt durch einen Mikroprozessor 30, im vorliegenden Beispiel einem Mikroprozessor vom Typ PIC 16C(F)84-04/SO, wobei an diesen Mikroprozessor der Taster 32 und eine Leuchtdiode 34 angeschlossen sind. Über einen I2C-Zweidrahtbus 42 werden die Steuerdaten dem HF-Modulator 30 zugeführt und bewirken dort eine Änderung der Umsetzfrequenz. In diesem Ausführungsbeispiel ist vorgesehen, daß die Ziel-frequenz in Schritten von 8 MHz geändert werden kann, wobei selbstverständlich auch andere Schritte gewählt werden können.

Das HF-Ausgangssignal des HF-Modulators 36 wird über einen 10pF-Kondensator an die F-Buchse gegeben. Der Kondensator läßt hierbei nur eine Wechselspannung durch, insbesondere das gewünschte HF-Signal, so daß die Betriebsspannung von 12 Volt, die ja ebenfalls an der Buchse 12 anliegt, nicht in den HF-Modulator eindringen kann. Wird der Hochfrequenzeingang 46 des HF-Modulators 36 nicht verwendet, ist er über einen 75 Ω Abschlußwiderstand auf Masse gelegt. In der Kamera ist weiterhin ein Eeprom (nicht dargestellt) untergebracht, in dem bei Trennung der Stromversorgung die programmierten Werte, insbesondere die eingestellte Zielfrequenz, gespeichert werden.

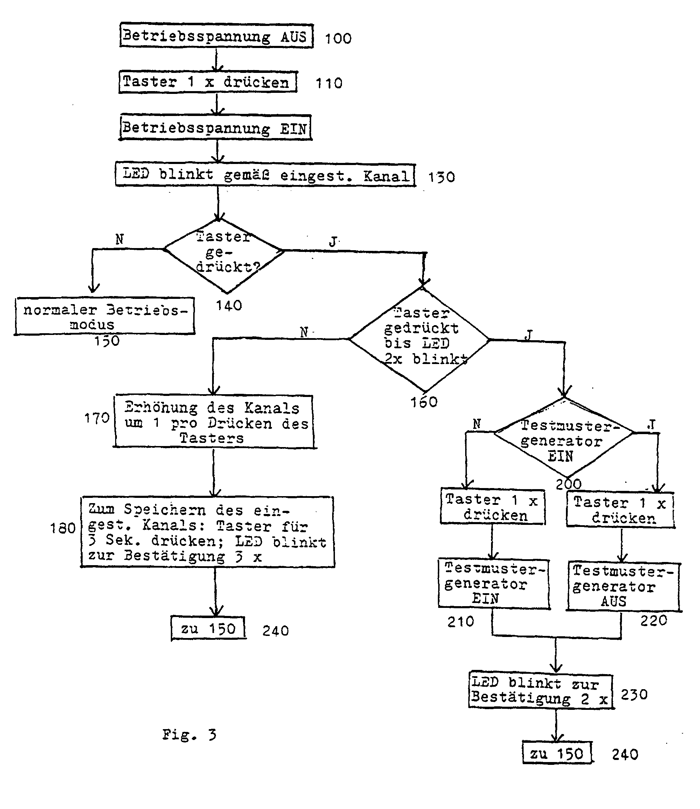

In Fig. 3 ist ein Programmablaufplan dargestellt, der verdeutlicht, wie die Zielfrequenz, d. h. vorliegend der gewünschte Kanal, geändert werden kann bzw. wie der Testgeneratormodus des HF-Modulators aktiviert werden kann.

Zunächst ist im Schritt 100 die Betriebsspannung AUS, d. h. die Schaltung in der Kamera wird nicht mit Spannung versorgt. Im Schritt 110 wird der Taster einmal gedrückt, wodurch die Schaltung, wie im Schritt 120 ausgedrückt wird, mit Betriebsspannung versorgt wird. Als Folge davon blinkt, wie im Schritt 130 dargestellt, die LED gemäß dem eingestellten Kanal, wobei vorliegend als Standardeinstellung der Kanal 21 eingestellt ist. Hierbei blinkt die LED zunächst gemäß der Zehnerstelle des Kanals, macht dann eine kurze Pause und blinkt anschließend in der Anzahl gemäß der Einerstelle des Kanals. Wird nunmehr der Taster im Schritt 140 so lange gedrückt, bis die LED einmal kurz blinkt, kann der Programmiermodus eingeleitet werden. Ist dies nicht der Fall, so wechselt der Modus in den normalen Betriebsmodus, Schritt 150. Wenn jedoch der Taster gedrückt wurde, wird im Schritt 160 weiter unterschieden, ob der Taster lediglich bis zu einem einmaligen Blinken der LED, weiter mit Schritt 170, oder bis zu einem zweimaligen Blinken der LED, weiter mit Schritt 200, gedrückt wurde. Bei Drücken des Tasters bis zum einmaligen Blinken der LED wird der Modus zum Programmieren des Kanals eingeleitet. Gemäß Schritt 180 wird pro Drücken des Tasters der Kanal um eins erhöht, vorliegend die Zielfrequenz also um 8 MHz erhöht. Nach Erreichen der maximalen Zielfrequenz, d. h. des Maximalkanals, wird auf den Anfangswert zurückgesetzt. Während dieses Programmierens des Kanals leuchtet bei einer Pause die LED gemäß der eingestellten Kanalzahl, siehe oben. Zur Speicherung des gewünschten schließlich eingestellten Kanals wird gemäß Schritt 180 der Taster für 3 Sek. gedrückt. Hierbei blinkt die LED zur Bestätigung dreimal. Nach dem Speichern wechselt die Kamera gemäß Schritt 190 in den normalen Betriebsmodus, siehe Schritt 150. Wird im Schritt 160 jedoch die Taste bis zu einem zweimaligen Blinken der LED gedrückt, Schritt 200, so wird, je nachdem, ob der Testmustergenerator des HF-Modulators aktiviert ist oder nicht, entweder im Schritt 210 der Testmustergenerator eingeschaltet oder im Schritt 220 der Testmustergenerator ausgeschaltet. Zur Bestätigung blinkt die LED zweimal, siehe Schritt 230, wobei die Kamera gemäß Schritt 240 anschliessend in den normalen Betriebsmodus wechselt.

Zur Einstellung der Audiounterträger kann vorgesehen werden, daß im Schritt 160 eine weitere Fallunterscheidung vorgenommen wird, d. h. bestimmt wird, ob die Taste bis zu einem dreimaligen Blinken der LED gedrückt gehalten wurde. Wurde die Taste bis zu einem dreimaligen Blinken der LED gedrückt, so wechselt der Programmiermodus in den Modus zur Festlegung der Audiounterträgerfrequenz. Hierbei wird durch entsprechende Dauer des Gedrückthaltens des Tasters festgelegt, ob ein Audiounterträger von 5,5 MHz, 6,0 MHz oder 6,5 MHz einzustellen ist, wobei die Dauer mit einer entsprechenden Anzahl von Blinkvorgängen der LED korrespondiert, d. h. wird der Taster so lange gedrückt gehalten, bis die LED einmal blinkt, so wird eine Audiounterträgerfrequenz von 5,5 MHz eingestellt, bei Gedrückthalten bis zum zweimaligen Blinken der LED eine Audiounterträgerfrequenz von 6,0 MHz sowie beim Gedrückthalten des Tasters bis zum dreimaligen Blinken der LED eine Audiounterträgerfrequenz von 6,5 MHz.

Schritt 160 kann beispielsweise ferner dadurch erweitert werden, daß bei Gedrückthalten des Tasters bis zum viermaligen Blinken der LED ein Feintuningmodus im HF-Modulator aktiviert wird.

## Patentansprüche

1. Kamera mit einer Umwandlungsvorrichtung (22; 26) zur Umwandlung zumindest eines optischen Signals in ein elektrisches Signal (24, 28),
**dadurch gekennzeichnet,**
**daß** die Kamera (10) weiterhin umfaßt:
- eine Eingabevorrichtung (32), über die eine Zielfrequenz angebbar ist;
- eine Umsetzvorrichtung (30) mit einem HF-Modulator (36), wobei mit der Umsetzvorrichtung das Ausgangssignal der Umwandlungsvorrichtung (22; 26) auf die Zielfrequenz umsetzbar ist, wobei der HF-Modulator (36) zumindest einen Eingangsanschluß (46) für ein weiteres HF-Signal aufweist; und
- einen Ausgangsanschluß (12), an dem eine Kombination aus dem Ausgangssignal der Umsetzvorrichtung (36) und dem weiteren HF-Signal abgreifbar ist.

2. Kamera nach Anspruch 1,
**dadurch gekennzeichnet,**
**daß** die Kamera (10) über den Ausgangsanschluß (12) oder über einen separaten Anschluß mit einer Gleichspannungsquelle verbindbar ist, die zumindest die Kamera (10) mit Gleichspannung versorgt.

3. Kamera nach Anspruch 1 oder 2,
**dadurch gekennzeichnet,**
**daß** die Eingabevorrichtung einen Taster (32) umfaßt.

4. Kamera nach Anspruch 3,
**dadurch gekennzeichnet,**
**daß** die Eingabevorrichtung weiterhin zumindest eine LED (34) umfaßt, über die durch Variation von Blinkdauer und Blinkfrequenz die eingegebene Zielfrequenz in verschlüsselter Form wiedergebbar ist, und die in Wirkverbindung mit dem Taster (32) die Einstellung einer Zielfrequenz unterstützt.

5. Kamera nach einem der vorhergehenden Ansprüche,
**dadurch gekennzeichnet,**
**daß** die Zielfrequenz im Empfangsbereich eines herkömmlichen Fernsehgeräts liegt.

6. Kamera nach einem der vorhergehenden Ansprüche,
**dadurch gekennzeichnet,**
**daß** die Umsetzvorrichtung (30, 36) weiterhin einen Mikroprozessor (30) umfaßt, wobei das Ausgangssignal der Eingabevorrichtung dem Mikroprozessor (30) zuführbar ist und der Mikroprozessor (30) in Abhängigkeit davon ein mit der Zielfrequenz korrespondierendes Steuersignal an den HF-Modulator (36) anlegt.

7. Kamera nach Anspruch 6,
**dadurch gekennzeichnet,**
**daß** der HF-Modulator (36) einen Eingang aufweist, über den das Ausgangssignal der Umwandlungsvorrichtung (22; 26) zuführbar ist.

8. Kamera nach einem der Ansprüche 2 bis 7,
**dadurch gekennzeichnet,**
**daß** die Kamera weiterhin eine Transformationsvorrichtung (18) aufweist, mit der das Gleichspannungssignal auf ein höheres Spannungsniveau transformierbar ist.

9. Kamera nach einem der Ansprüche 2 bis 8,
**dadurch gekennzeichnet,**
**daß** sie eine Vorrichtung aufweist, die zumindest einer weiteren Kamera Gleichspannung, vorzugsweise über die Verbindung, über die der Kamera (10) das HF-Ausgangssignal der weiteren Kamera zugeführt wird, bereitstellt.

## Claims

1. Camera including a converting device (22; 26) for converting at least one optical signal into an electrical signal (24, 28),
**characterized in that**
the camera (10) further includes:
- an input device (32), through which a target frequency is specifiable;
- a translating device (30) having a HF modulator (36), wherein the output signal of the converting device (22; 26) is translatable to the target frequency by the translating device, wherein the HF modulator (36) has at least one input terminal (46) for another HF signal; and
- an output terminal (12), at which a combination of the output signal of the translating device (36) and the other HF signal can be picked up.

2. Camera according to claim 1,
**characterized in that**
the camera (10) is connectable to a DC voltage source, which supplies at least the camera (10) with DC voltage, through the output terminal (12) or through a separate terminal.

3. Camera according to claim 1 or 2,
**characterized in that**
the input device includes a push button (32).

4. Camera according to claim 3,
**characterized in that**
the input device further includes at least one LED (34), through which the input target frequency is reproducible in encoded form by variation of blink duration and blink rate, and which supports setting a target frequency in effective connection to the push button (32).

5. Camera according to any one of the preceding claims,
**characterized in that**
the target frequency is in the reception range of a conventional TV set.

6. Camera according to any one of the preceding claims,
**characterized in that**
the translating device (30, 36) further includes a microprocessor (30), wherein the output signal of the input device can be supplied to the microprocessor (30), and depending on that, the microprocessor (30) applies a control signal corresponding to the target frequency to the HF modulator (36).

7. Camera according to claim 6,
**characterized in that**
the HF modulator (36) has an input, through which the output signal can be supplied to the converting device (22; 26).

8. Camera according to any one of claims 2 to 7,
**characterized in that**,
the camera further has a transformation device (18), by which the DC voltage signal is transformable to a higher voltage level.

9. Camera according to any one of claims 2 to 8,
**characterized in that**
it has a device providing DC voltage to at least one further camera, preferably through the connection, through which the HF output signal of the further camera is supplied to the camera (10).

## Revendications

1. Caméra comprenant un dispositif de transformation (22; 26) pour transformer au moins un signal optique en signal électrique (24, 28),
**caractérisée en ce que**
la caméra (10) comprend par ailleurs:
- un moyen d'enregistrement (32) permettant l'indication d'une fréquence cible;
- un dispositif de conversion (30) comprenant un modulateur H.F. (36), le dispositif de conversion permettant de convertir le signal de sortie du dispositif de transformation (22; 26) à la fréquence cible, le modulateur H.F. (36) comprenant au moins une borne d'entrée (46) relative à un autre signal H.F.; et
- une borne de sortie (12) permettant la prise d'une combinaison du signal de sortie du dispositif de conversion (36) et l'autre signal H.F..

2. Caméra selon la revendication 1,
**caractérisée en ce que**
la caméra (10) est susceptible d'être raccordée, par l'intermédiaire de la borne de sortie (12) ou d'une borne indépendante, à une source de tension continue alimentant la caméra (10) au moins d'une tension continue.

3. Caméra selon la revendication 1 ou 2,
**caractérisée en ce que**
le dispositif d'enregistrement comprend un bouton-poussoir (32).

4. Caméra selon la revendication 3,
**caractérisée en ce que**
le dispositif d'enregistrement comprend par ailleurs au moins une DEL (34) permettant de rendre la fréquence cible sous forme codée en variant la durée et la fréquence de clignotement et supporte, en coopération avec le bouton-poussoir (32), le réglage d'une fréquence cible.

5. Caméra selon l'une des revendications précédentes,
**caractérisée en ce que**
la fréquence cible se situe dans la bande de réception d'un poste téléviseur classique.

6. Caméra selon l'une des revendications précédentes,
**caractérisée en ce que**
le dispositif de conversion (30, 36) comprend par ailleurs un microprocesseur (30), le signal de sortie du dispositif d'enregistrement étant apte à être acheminé vers le microprocesseur (30), le microprocesseur (30) appliquant, en fonction de celui-ci, un signal de commande au modulateur H.F. (36) correspondant à la fréquence cible.

7. Caméra selon la revendication 6,
**caractérisée en ce que**
le modulateur H.F. (36) comporte une entrée permettant l'application du signal de sortie du dispositif de conversion (22; 26).

8. Caméra selon l'une des revendications 2 à 7,
**caractérisée en ce que**
la caméra comporte par ailleurs un dispositif de transformation (18) permettant de transformer le signal de tension continue à un niveau de tension plus élevé.

9. Caméra selon l'une des revendications 2 à 8,
**caractérisée en ce qu'**elle
comporte un moyen pour approvisionner au moins une autre caméra en tension continue, de préférence par l'intermédiaire de la liaison fournissant à la caméra (10) le signal de sortie H.F. de l'autre caméra.
